# EUROPEAN PATENT SPECIFICATION

(11) **EP 0 626 398 B1**
(45) Date of publication and mention of the grant of the patent: **06.11.1996**
(21) Application number: 94108137.4
(22) Date of filing: 26.05.1994
(51) Int. Cl.: C08F 236/18, C08F 2/20, C09J 111/02, C09J 119/02

(54) **Polychloroprene latex and its composition**
Polychloroprenlatex sowie seine Mischung
Latex de polychloroprène et son mélange

(30) Priority: 28.05.1993 JP 126846/93
(43) Date of publication of application: 30.11.1994
(73) Proprietor: DENKI KAGAKU KOGYO KABUSHIKI KAISHA, Chiyoda-ku Tokyo (JP)
(72) Inventor: Satoh, Mikitoshi, c/o Denki Kagaku Kogyo K.K., Nishi-kubiki-gun, Niigata-ken (JP); Denda, Yasuaki, c/o Denki Kagaku Kogyo K.K., Nishi-kubiki-gun, Niigata-ken (JP); Koga, Masao, c/o Denki Kagaku Kogyo K.K., Nishi-kubiki-gun, Niigata-ken (JP)
(74) Representative: Wächtershäuser, Günter, Prof. Dr.

(56) References cited:
- FR-A- 2 231 725
- CHEMICAL ABSTRACTS, vol. 108, no. 6, 8 February 1988, Columbus, Ohio, US; abstract no. 39370, A.V.GEVORKYAN ET AL. 'Synthesis, study of properties, and optimization of the composition of a new carboxyl-containing chloroprene - 2,3-dichlorobutadiene copolymer latex'
- CHEMICAL ABSTRACTS, vol. 108, no. 6, 8 February 1988, Columbus, Ohio, US; abstract no. 39370 & Zh. Prikl. Khim.

## Description

The present invention relates to a polychloroprene latex and its composition.

Heretofore, adhesives using polychloroprene as the base material were mainly of a solvent type. However, in recent years, solvent type adhesives have been disfavored in view of the problems due to the solvent, such as the toxicity, the danger of explosion or fire or the adverse effects to environment, and demand for non-solvent type adhesives has been increasing.

A polychloroprene latex has a very high adhesive force like a solvent-type adhesive and does not require use of an organic solvent, and it is expected to be a substitute for a solvent type adhesive. However, the polychloroprene latex adhesive has been practically used only in a limited field, and it has been desired ① to further improve the adhesive strength and heat resistance and ② to prevent the color change.

On the other hand, it has been known from Japanese Unexamined Patent Publication No. 22047/1975 to polymerize chloroprene and an unsaturated carboxylic acid in the presence of a water-soluble polymer compound and use the polymer as an adhesive. Further, the same publication discloses that other monomers copolymerizable to chloroprene may be copolymerized as third components. However, such copolymerization is limited to such an extent that chloroprene in a small amount of about 10% at the maximum can be substituted by another copolymerizable monomer containing no free carboxylic group.

The present inventors have found it possible to improve the adhesive properties, the heat resistance and the discoloration resistance over the conventional polychloroprene latex by emulsion-polymerizing prescribed amounts of chloroprene, 2,3-dichlorobutadiene and an ethylenically unsaturated carboxylic acid in the presence of a water-soluble polymer compound having a colloid-stabilizing activity.

Thus, the present invention provides a polychloroprene latex obtained by emulsion polymerization of 100 parts by weight of chloroprene, from 20 to 200 parts by weight of 2,3-dichlorobutadiene and from 0.5 to 20 parts by weight of an ethylenically unsaturated carboxylic acid in the presence of from 1 to 10 parts by weight of a water-soluble polymer having a colloid-stabilizing activity.

Further, the present invention provides a polychloroprene latex composition containing up to 100 parts by weight of an at least one tackifier resin per 100 parts by weight of the solid content of such a polychloroprene latex.

In the present invention, use of 2,3-dichlorobutadiene provides an important function for improvement of e.g. the peel strength, the shear strength, the heat strength and the discoloration resistance of the adhesive, and its amount is usually from 20 to 200 parts by weight, preferably from 25 to 150 parts by weight, per 100 parts by weight of chloroprene.

In the present invention, the ethylenically unsaturated carboxylic acid may, for example, be acrylic acid, methacrylic acid, crotonic acid, fumaric acid, maleic acid, citraconic acid or glutaconic acid. These acids may be used alone or in combination as a mixture of two or more of them.

The amount of such an unsaturated carboxylic acid is preferably from 0.5 to 20 parts by weight per 100 parts by weight of chloroprene, and its optimum amount varies depending upon e.g. the type and the molecular weight of the particular unsaturated carboxylic acid, but is usually within a range of from 1 to 10 parts by weight. If the amount of the unsaturated carboxylic acid is less than such a range, no adequate adhesive strength or heat strength tends to be obtained. On the other hand, if it exceeds such a range, the stability of the latex tends to deteriorate.

In the present invention, the water-soluble polymer compound having a colloid-stabilizing activity may be various water-soluble polymer compounds which have a colloid-stabilizing activity i.e. an activity to stabilize fine non-hydrophilic particles in water in a finely dispersed state. Typical examples include a polyvinyl alcohol and its copolymers (such as a copolymer with acrylamide), a polyvinyl ether and its copolymers (such as a copolymer with maleic acid), a polyvinyl pyrrolidone and its copolymers (such as a copolymer with vinyl acetate), chemically modified products of such polymers, and cellulose derivatives (such as hydroxyethyl cellulose).

Among them, a polyvinyl alcohol and a polyvinyl alcohol-acrylamide copolymer are particularly suitable for use, since the emulsion polymerization reaction of the present invention can thereby easily be controlled. The polyvinyl alcohol and its copolymers may be those obtained by chemically modifying part of the polymers by e.g. acetalization, esterification or etherification. Further, such water-soluble polymer compounds may be used alone or in combination as a mixture of two or more of them.

The amount of the water-soluble polymer compound is usually from 1 to 10 parts by weight per 100 parts by weight of chloroprene. If the amount is less than this range, no adequate emulsifying function tends to be obtained. On the other hand, if the amount exceeds the range, the viscosity during the polymerization tends to be high, whereby runaway of the polymerization reaction or flocculation is likely to result.

To assist the stability of the latex, a secondary emulsifier may be added to the polychloroprene latex of the present invention. There is no particular restriction as to the type or the amount of such a secondary emulsifier, and an ionic or nonionic emulsifier which is commonly used as a dispersant or emulsifier, may be employed. The amount may vary depending upon the type of the emulsifier, but is usually within a range of from 0.1 to 2.0 parts by weight per 100 parts by weight of the solid content of the polychloroprene latex. With respect to the timing for the addition, it may be added at the time of charging the monomers or after the polymerization. However, depending upon the type of the secondary emulsifier, it is possible that when such an emulsifier is added at the time of charging monomers, it inhibits the polymerization reaction, or it adversely affects the stability of the latex.

To the polychloroprene latex of the present invention, a chain transfer agent may be added during the polymerization to control the molecular weight of the polymer which constitutes the latex. The type of the chain transfer agent is not particularly limited. However, a conventional type such as a xanthate type or a mercaptan type having a chain transfer activity for the polymerization reaction of chloroprene, is preferably employed.

The amount varies depending upon the type of the chain transfer agent. However, with a latex, designed to have a high molecular weight by suppressing the amount of the chain transfer agent, no adequate tackiness tends to be obtained although the heat resistance will be good. On the other hand, with a latex designed to have a low molecular weight by incorporating the chain transfer agent excessively, the heat resistance and the adhesive strength tend to be low, although the tackiness can readily be obtained. Accordingly, it is necessary to optimize the amount of such a chain transfer agent in view of the particular application as an adhesive. The specific amount is usually preferably about 0.3 part by weight per 100 parts by weight of the total amount of chloroprene and 2,3-dichlorobutadiene.

The polychloroprene latex of the present invention may be formed into a composition by adding an emulsion of a conventional tackifier resin (hereinafter referred to as a resin emulsion). Typical resin emulsions include, for example, those having a rosin resin (a modified rosin type or a polymerized rosin type), a terpene resin, a phenol resin, a coumaroneindene resin, an aliphatic hydrocarbon resin, an aromatic petroleum resin, etc. dispersed in water by means of an emulsifier or a dispersant. Such a resin emulsion may be the one having a single resin dispersed in water or the one having a plurality of resins dispersed in water, or it may be a combination of a plurality of such emulsions.

The amount of the resin emulsion varies depending upon the type of the base resin of the resin emulsion, the proportions of the respective emulsions in the case of the combination or the purpose of the adhesive, but is usually preferably at most 100 parts by weight as calculated as the resin solid content per 100 parts by weight of the solid content of the polychloroprene latex. If it is incorporated beyond this range, the proportion of the polychloroprene latex decreases, whereby the adhesive properties tend to be low.

To the polychloroprene latex composition of the present invention, conventional additives commonly used for latexes, such as an antioxidant, a film-forming agent, a metal oxide, a vulcanizer and a thickener may optionally be incorporated.

The polychloroprene latex composition of the present invention can be blended by means of a conventional mixing machine commonly used for mixing latexes, such as a mixer provided with a stirrer, such as a propeller type, anchor type or screw type mixer.

The polychloroprene latex composition of the present invention can be used as an adhesive for bonding objects of the same type or objects of different types, such as paper, wood, cloth, skin, leather, rubber, plastics, plastic foams, porcelain, glass, ceramics and metals.

Now, the present invention will be described in further detail with reference to Examples. However, it should be understood that the present invention is by no means restricted to such specific Examples.

### PREPARATION EXAMPLE 1

Into a 3 ℓ four-necked flask, 30 parts by weight of polyvinyl alcohol (Denka Poval B-05; average degree of polymerization: 600, saponification degree: 88%) and 1250 parts by weight of deionized water were charged, and the mixture was heated to 60°C for dissolution. The obtained aqueous solution was cooled to near room temperature, and 1000 parts by weight of chloroprene, 250 parts by weight of 2,3-dichlorobutdiene, 30 parts by weight of methacrylic acid and 3 parts by weight of octyl mercaptan were added thereto. Then, while maintaining the temperature at 40°C with stirring, an initiator (potassium persulfate/sodium anthraquinone-β-sulfonate) was added under a nitrogen stream to proceed with the polymerization reaction, whereupon an emulsion polymerization product was obtained. To this product, a suitable amount of a 20% diethanolamine aqueous solution was added to adjust the pH to 7 to obtain a polychloroprene latex.

The obtained polychloroprene latex had a specific gravity of 1.118, and the weight ratio of chloroprene units/2,3-dichlorobutadiene units in the polymer as measured by means of pyrolysis gas chromatography was 78.5/21.5.

### Conditions for pyrolysis gas chromatography

Pyrolytic temperature: 590°C
Curie Point Pyrolyzer (manufactured by Nippon Bunseki Kogyo)
Gas Chromatograph 5890 (manufactured by Hullet Packered)
Capillary column DB-1 30 m (manufactured by J & W) (A calibration curve was prepared from the values obtained by C31-NMR measurement of a model latex, and quantitative analysis was made based on this calibration curve.)

### EXAMPLE 1

To 100 parts by weight of the solid content of the polychloroprene latex prepared in Preparation Example 1, 2 parts by weight of a dispersion of zinc oxide finely dispersed in an aqueous ammonium solution of casein so that the solid content would be 50 wt%, was added. Further, as a thickener, a 6% sodium polyacrylate aqueous solution was added in an amount of 3 parts by weight as calculated as the solid content to adjust the viscosity. The product was coated on a canvas and on a veneer plywood, and when the coated surfaces were dried, they were put together and dried at room temperature in an atmosphere with a humidity of 50% for 7 days, whereupon the adhesive strength was measured. The amount of the composition coated on the object was 350 g/m² in the case of the canvas and 150 g/m² in the case of other material.

For the evaluation of the heat resistance, the high temperature load-holding time and the discoloration resistance were evaluated. The former was determined in such a manner that a weight of 1 kg was suspended from one end of a test piece having a canvas bonded thereto (the length of the bonded area: 10 cm), and the test piece was hung in a Geer oven of 70°C, whereby the time until the test piece peeled off under the heating was measured. The latter was determined in such a manner that the film obtained by drying a latex was put in a Geer oven of 100°C, and the discoloration of the film upon expiration of 50 hours was evaluated by visual observation.

### PREPARATION EXAMPLE 2

A polychloroprene latex was prepared under the same conditions as in Preparation Example 1 except that 1650 parts by weight of deionized water and 650 parts by weight of 2,3-dichlorobutadiene were used per 1000 parts by weight of chloroprene. The obtained polychloroprene latex had a specific gravity of 1.137, and the weight ratio of chloroprene units/2,3-dichlorobutadiene units in the polymer was 58.4/41.6.

### EXAMPLE 2

With respect to the polychloroprene latex prepared in Preparation Example 2, the adhesive properties were evaluated in the same manner as in Example 1.

### PREPARATION EXAMPLE 3

A polychloroprene latex was prepared under the same conditions as in Preparation Example 1 except that 2500 parts by weight of deionized water and 1500 parts by weight of 2,3-dichlorobutadiene were used per 1000 parts by weight of chloroprene. The obtained polychloroprene latex had a specific gravity of 1.147, and the weight ratio of chloroprene units/2,3-dichlorobutadiene units in the polymer was 37.9/62.1.

### EXAMPLE 3

With respect to the polychloroprene latex prepared in Preparation Example 3, the adhesive properties were evaluated in the same manner as in Example 1.

### PREPARATION EXAMPLE 4

A polychloroprene latex was prepared under the same conditions as in Preparation Example 1 except that the polyvinyl alcohol was changed to a vinyl alcohol-acrylamide copolymer (Denka Poval NP-15: acrylamide content: 2 mol%, average degree of polymerization: 600, saponification degree: 88%). The obtained polychloroprene latex had a specific gravity of 1.118, and a weight ratio of chloroprene units/2,3-dichlorobutadiene units in the polymer was 78.0/22.0.

### EXAMPLE 4

With respect to the polychloroprene latex prepared in Preparation Example 4, the adhesive properties were evaluated in the same manner as in Example 1.

### PREPARATION EXAMPLE 5

A polychloroprene latex was prepared under the same conditions as in Preparation Example 1 except that 1000 parts by weight of deionized water was added per 1000 pats by weight of chloroprene, and 2,3-dichlorobutadiene was not added. The obtained polychloroprene latex had a specific gravity of 1.105, and the weight ratio of chloroprene units/2,3-dichlorobutadiene units in the polymer was 100/0.

### COMPARATIVE EXAMPLE 1

With respect to the polychloroprene latex prepared in Preparation Example 5, the adhesive properties were evaluated in the same manner as in Example 1.

### PREPARATION EXAMPLE 6

A polychloroprene latex was prepared under the same conditions as in Preparation Example 1 except that 1100 parts by weight of deionized water and 100 parts by weight of 2,3-dichlorobutadiene were used per 1000 parts by weight of chloroprene. The obtained polychloroprene latex had a specific gravity of 1.113, and the weight ratio of chloroprene units/2,3-dichlorobutadiene units in the polymer was 88.8/11.2.

### COMPARATIVE EXAMPLE 2

With respect to the polychloroprene latex prepared in Preparation Example 6, the adhesive properties were evaluated in the same manner as in Example 1.

### PREPARATION EXAMPLE 7

Polymerization was attempted under the same conditions as in Example 1 except that 3500 parts by weight of deionized water and 2500 parts by weight of 2,3-dichlorobutadiene were used per 1000 parts by weight of chloroprene. In the polychloroprene latex thus obtained, formation of aggregates was observed. The polychloroprene latex had a specific gravity of 1.150, and the weight ratio of chloroprene units/2,3-dichlorobutadiene units in the polymer was 27.3/72.7.

### COMPARATIVE EXAMPLE 3

With respect to the polychloroprene latex prepared in Preparation Example 7, the adhesive properties were evaluated in the same manner as in Example 1.

### PREPARATION EXAMPLE 8

A polychloroprene latex was prepared under the same conditions as in Preparation Example 1 except that instead of the polyvinyl alcohol, 10 parts by weight of polyoxyethylene cetyl ether and 30 parts by weight of dodecylbenzene sulfonic acid were used as emulsifiers per 1000 parts by weight of chloroprene. The obtained polychloroprene latex had a specific gravity of 1.115, and the weight ratio of chloroprene units/2,3-dichlorobutadiene units in the polymer was 79.2/20.8.

### COMPARATIVE EXAMPLE 4

With respect to the polychloroprene latex prepared in Preparation Example 8, the adhesive properties were evaluated in the same manner as in Example 1.

The results of Preparation Examples 1 to 8 are shown in Table 1, and the results of Examples 1 to 4 and Comparative Example 1 to 4 are shown in Table 2.

### EXAMPLE 5

To 100 parts by weight of the solid content of the polychloroprene latex prepared in Preparation Example 1, 40 parts by weight as calculated as the solid content of the rosin ester type resin emulsion (solid content: 50 wt%) and 2 parts by weight of each of dispersions of zinc oxide and an antioxidant (2,2'-methylene-bis-(4-methyl-6-tert-butylphenol)/Nocrac NS-6 (manufactured by Ouchi Shinko Kagaku Co.)) finely dispersed in an aqueous ammonia solution of casein so that the respective solid contents would be 50 wt%, were added. Further, as a thickener, a 6% sodium polyacrylate aqueous solution was added in an amount of 1.2 parts by weight as calculated as a solid content to adjust the viscosity. With respect to the product, the adhesive properties were evaluated in accordance with Example 1.

### EXAMPLE 6

The adhesive properties were evaluated in the same manner as in Example 5 except that the polychloroprene latex prepared in Preparation Example 2 was used.

### EXAMPLE 7

The adhesive properties were evaluated in the same manner as in Example 5 except that the polychloroprene latex prepared in Preparation Example 3 was used.

### EXAMPLE 8

The adhesive properties were evaluated in the same manner as in Example 5 except that the polychloroprene latex prepared in Preparation Example 4 was used.

### EXAMPLE 9

The adhesive properties were evaluated in the same manner as in Example 5 except that the polychloroprene latex prepared in Preparation Example 4 was used, and the resin emulsion B was used.

### COMPARATIVE EXAMPLE 5

The adhesive properties were evaluated in the same manner as in Example 5 except that the polychloroprene latex prepared in Preparation Example 5 was used.

### COMPARATIVE EXAMPLE 6

The adhesive properties were evaluated in the same manner as in Example 5 except that the polychloroprene latex prepared in Preparation Example 6 was used.

### COMPARATIVE EXAMPLE 7

The adhesive properties were evaluated in the same manner as in Example 5 except that the polychloroprene latex prepared in Preparation Example 7 was used.

### COMPARATIVE EXAMPLE 8

The adhesive properties were evaluated in the same manner as in Example 5 except that the polychloroprene latex prepared in Preparation Example 8 was used.

The results of Examples 5 to 9 and Comparative Examples 5 to 8 are shown in Table 3.

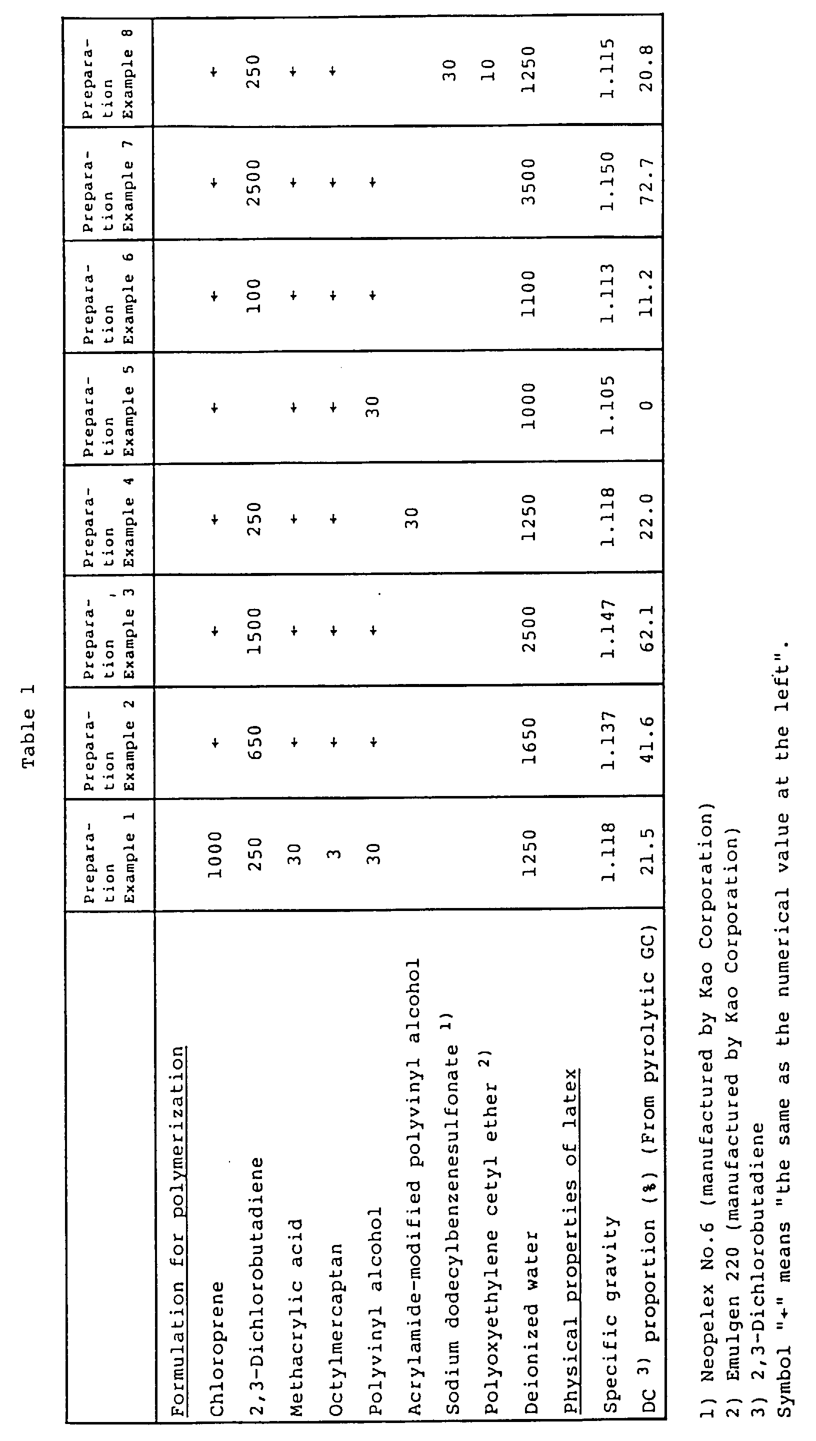

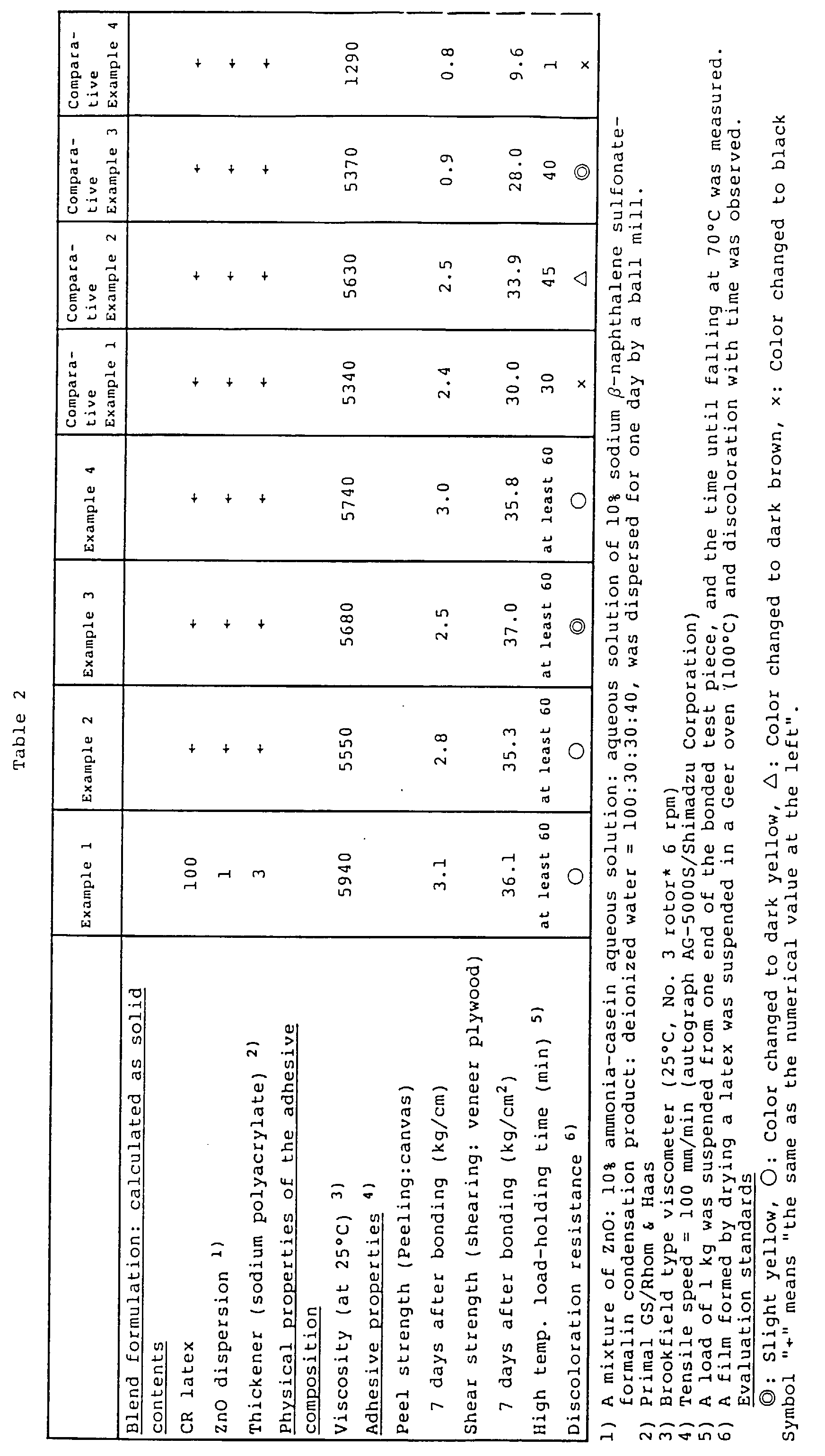

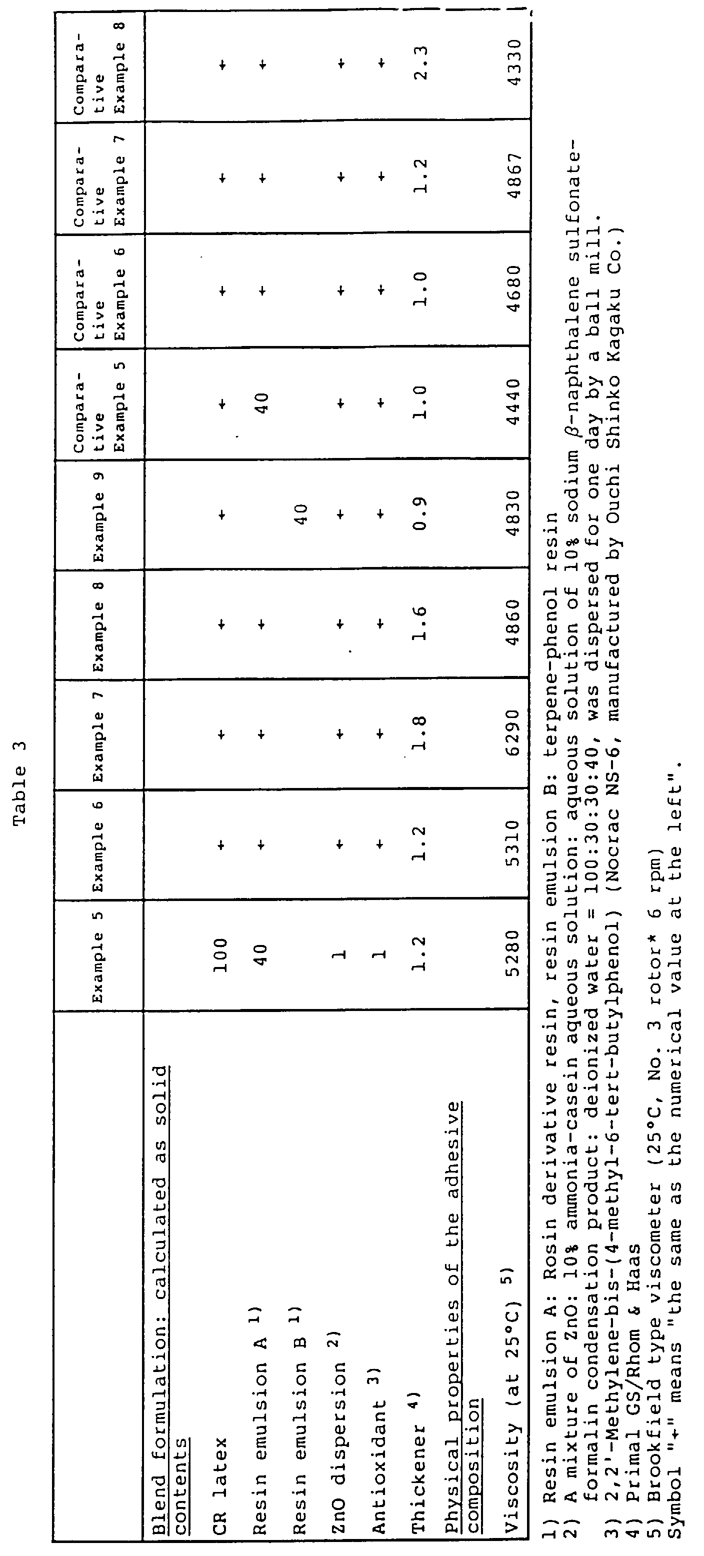

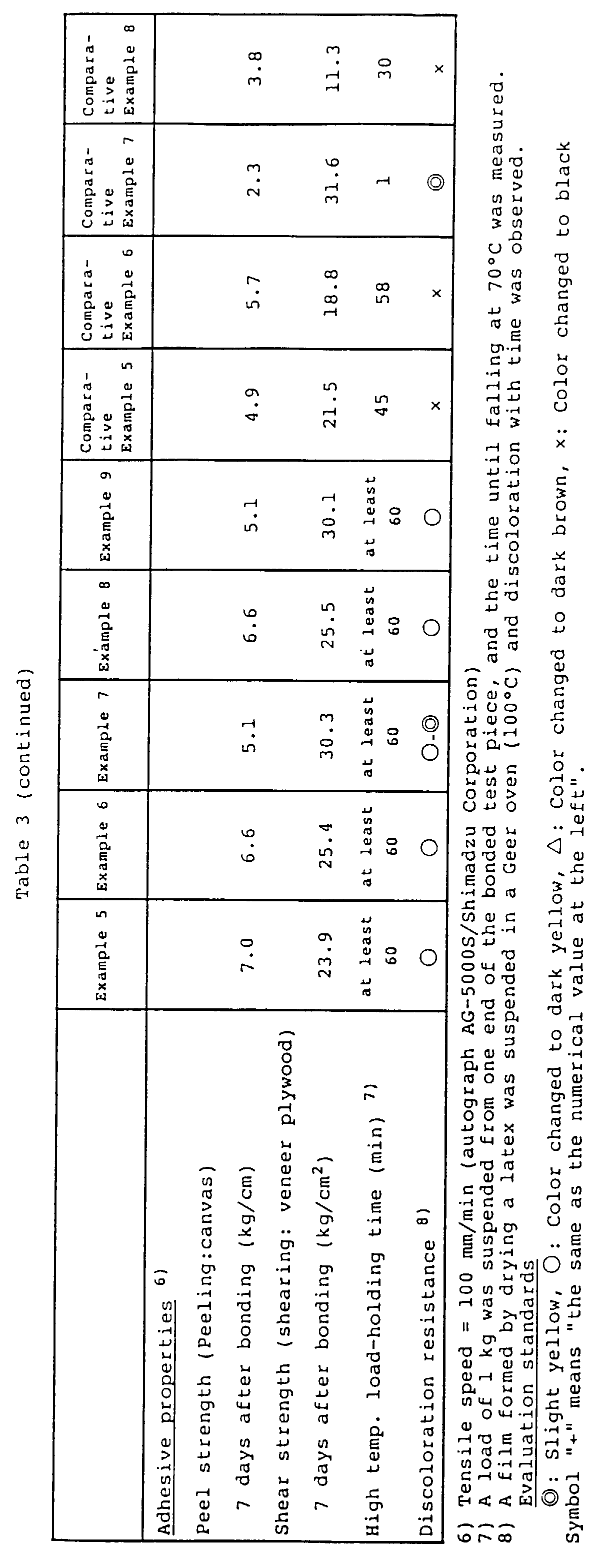

## Claims

1. A polychloroprene latex obtained by emulsion polymerization of 100 parts by weight of chloroprene, from 20 to 200 parts by weight of 2,3-dichlorobutadiene and from 0.5 to 20 parts by weight of an ethylenically unsaturated carboxylic acid in the presence of from 1 to 10 parts by weight of a water-soluble polymer compound having a colloid-stabilizing activity.

2. The polychloroprene latex according to Claim 1, wherein the ethylenically unsaturated carboxylic acid is at least one member selected from the group consisting of acrylic acid, methacrylic acid, crotonic acid, fumaric acid, maleic acid, citraconic acid and glutaconic acid.

3. The polychloroprene latex according to Claim 1 or 2, wherein the water-soluble polymer compound having a colloid-stabilizing activity is a compound selected from the group consisting of a polyvinyl alcohol and its copolymers, a polyvinyl ether and its copolymers, a polyvinyl pyrrolidone and its copolymers, chemically modified products of these polymers and cellulose derivatives.

4. The polychloroprene latex according to Claim 1 or 3, wherein the ethylenically unsaturated carboxylic acid is methacrylic acid.

5. The polychloroprene latex according to Claim 1, 2 or 4, wherein the water-soluble polymer compound having a colloid-stabilizing activity is a polyvinyl alcohol or a vinyl alcohol-acrylamide copolymer.

6. The polychloroprene latex according to any one of Claims 1 to 5, wherein 2,3-dichlorobutadiene is in an amount of from 25 to 150 parts by weight per 100 parts by weight of chloroprene.

7. The polychloroprene latex according to any one of Claims 1 to 6, wherein the ethylenically unsaturated carboxylic acid is in an amount of from 1 to 10 parts by weight per 100 parts by weight of chloroprene.

8. A polychloroprene latex composition containing up to 100 parts by weight of at least one tackifier resin per 100 parts by weight of the solid content of the polychloroprene latex as defined in Claim 1.

9. The polychloroprene latex composition according to Claim 8, wherein the tackifier resin is at least one resin selected from the group consisting of a rosin resin, a terpene resin, a phenol resin, a coumaroneindene resin, an aliphatic hydrocarbon and an aromatic petroleum resin.

10. The polychloroprene latex composition according to Claim 9, which is obtained by dispersing the tackifier resin in water to form a resin emulsion and adding the resin emulsion to the polychloroprene latex.

## Patentansprüche

1. Polychloropren-Latex, erhalten durch Emulsionspolymerisation von 100 Gewichtsteilen Chloropren, 20 bis 200 Gewichtsteilen 2,3-Dichlorbutadien und 0,5 bis 20 Gewichtsteilen einer ethylenisch ungesättigten Carbonsäure in Anwesenheit von 1 bis 10 Gewichtsteilen einer wasserlöslichen Polymerverbindung mit Kolloid-stabilisierender Aktivität.

2. Polychloropren-Latex nach Anspruch 1, worin die ethylenisch ungesättigte Carbonsäure mindestens ein Mitglied ist, das aus der Gruppe ausgewählt ist, die aus Acrylsäure, Methacrylsäure, Crotonsäure, Fumarsäure, Maleinsäure, Citraconsäure und Glutaconsäure besteht.

3. Polychloropren-Latex nach Anspruch 1 oder 2, worin die wasserlösliche Polymerverbindung mit Kolloid-stabilisierender Aktivität eine Verbindung ist, die aus der Gruppe ausgewählt ist, die aus einem Polyvinylalkohol und dessen copolymeren, einem Polyvinylether und dessen Copolymeren, einem Polyvinylpyrrolidon und dessen Copolymeren, chemisch modifizierten Produkten dieser Polymere und cellulose-Derivaten besteht.

4. Polychloropren-Latex nach Anspruch 1 oder 3, worin es sich bei der ethylenisch ungesättigte Carbonsäure um Methacrylsäure handelt.

5. Polychloropren-Latex nach Anspruch 1, 2 oder 4, worin es sich bei der wasserlöslichen Polymerverbindung mit Kolloid-stabilisierender Aktivität um einen Polyvinylalkohol oder ein Vinylalkohol-Acrylamid-Copolymer handelt.

6. Polychloropren-Latex nach irgendeinem der Ansprüche 1 bis 5, worin 2,3-Dichlorbutadien in einer Menge von 25 bis 150 Gewichtsteilen pro 100 Gewichtsteile Chloropren vorliegt.

7. Polychloropren-Latex nach irgendeinem der Ansprüche 1 bis 6, worin die ethylenisch ungesättigte Carbonsäure in einer Menge von 1 bis 10 Cewichtsteilen pro 100 Gewichtsteile Chloropren vorliegt.

8. Polychloropren-Latexzusammensetzung, die bis zu 100 Gewichtsteilen mindestens eines klebrigmachenden Harzes pro 100 Gewichtsteile des Feststoffgehalts des in Anspruch 1 definierten Polychloropren-Latex enthält.

9. Polychloropren-Latexzusammensetzung nach Anspruch 8, worin das klebrigmachende Harz mindestens ein Harz ist, das aus der Gruppe ausgewählt ist, die aus einem Kolophonium-Harz, einem Terpenharz, einem Phenolharz, einem Cumaroninden-Harz, einem aliphatischen Kohlenwasserstoff und einem aromatischen Petroleumharz besteht.

10. Polychloropren-Latexzusammensetzung nach Anspruch 9, die erhalten wird, indem man das klebrigmachende Harz in Wasser dispergiert, um eine Harzemulsion zu bilden, und die Harzemulsion zu dem Chloropren-Latex gibt.

## Revendications

1. Latex de polychloroprène obtenu par polymérisation en émulsion de 100 parties en poids de chloroprène, de 20 à 200 parties en poids de 2,3-dichlorobutadiène et de 0,5 à 20 parties en poids d'un acide carboxylique éthyléniquement insaturé, en présence de 1 à 10 parties en poids d'un composé polymère soluble dans l'eau présentant une activité de stabilisation des colloïdes.

2. Latex de polychloroprène selon la revendication 1, dans lequel l'acide carboxylique éthyléniquement insaturé est au moins un élément choisi dans le groupe constitué de l'acide acrylique, de l'acide méthacrylique, de l'acide crotonique, de l'acide fumarique, de l'acide maléique, de l'acide citraconique et de l'acide glutaconique.

3. Latex de polychloroprène selon la revendication 1 ou 2, dans lequel le composé polymère soluble dans l'eau présentant une activité de stabilisation des colloïdes est un composé choisi dans le groupe constitué d'un poly(alcool vinylique) et ses copolymères, d'un poly(éther vinylique) et ses copolymères, d'une polyvinylpyrrolidone et ses copolymères, de produits chimiquement modifiés de ces polymères et de dérivés de cellulose.

4. Latex de polychloroprène selon la revendication 1 ou 3, dans lequel l'acide carboxylique éthyléniquement insaturé est l'acide méthacrylique.

5. Latex de polychloroprène selon la revendication 1, 2 ou 4, dans lequel le composé polymère soluble dans l'eau présentant une activité de stabilisation des colloïdes est un poly(alcool vinylique) ou un copolymère d'alcool vinylique et d'acrylamide.

6. Latex de polychloroprène selon l'une quelconque des revendications 1 à 5, dans lequel le 2,3-dichlorobutadiène est en une quantité de 25 à 150 parties en poids pour 100 parties en poids de chloroprène.

7. Latex de polychloroprène selon l'une quelconque des revendications 1 à 6, dans lequel l'acide carboxylique éthyléniquement insaturé est en une quantité de 1 à 10 parties en poids pour 100 parties en poids de chloroprène.

8. Composition de latex de polychloroprène contenant jusqu'à 100 parties en poids d'au moins une résine collante pour 100 parties en poids de la teneur en solides du latex de polychloroprène défini en revendication 1.

9. Composition de latex de polychloroprène selon la revendication 8, dans lequel la résine collante est au moins une résine choisie dans le groupe constitué d'une résine de colophane, d'une résine de terpène, d'une résine de phénol, d'une résine de coumarone-indène, d'un hydrocarbure aliphatique et d'une résine aromatique de pétrole.

10. Composition de latex de polychloroprène selon la revendication 9, qui est obtenue en dispersant la résine collante dans l'eau, pour former une émulsion de résine, et en ajoutant l'émulsion de résine au latex de polychloroprène.
